# EUROPEAN PATENT SPECIFICATION

(11) **EP 2 199 051 B1**
(45) Date of publication and mention of the grant of the patent: **22.11.2017**
(21) Application number: 08830175.9
(22) Date of filing: 08.09.2008
(51) Int. Cl.: B29C 43/34, B29C 33/38, B29C 43/02, B29D 11/00, C08F 14/18, G02B 1/04, B29K 27/12, B29L 11/00

(54) **METHOD OF MOLDING AMORPHOUS PERFLUORO RESIN AND OPTIC DEVICES**
VERFAHREN ZUR FORMUNG VON AMORPHEM PERFLUORHARZ UND OPTISCHES ELEMENT
PROCÉDÉ DE MOULAGE D'UNE RÉSINE PERFLUORÉE AMORPHE ET ÉLÉMENT OPTIQUE

(30) Priority: 10.09.2007 JP 2007233890
(43) Date of publication of application: 23.06.2010
(73) Proprietor: Inter-University Research Institute Corporation High Energy Accelerator Research Organization, Tsukuba-shi Ibaraki 305-0801 (JP); Japan Atomic Energy Agency, Naka-gun Ibaraki 319-1184 (JP); Asahi Glass Company, Limited, Chiyoda-ku Tokyo 100-8405 (JP)
(72) Inventor: INO, Takashi, Tsukuba-shi Ibaraki 305-0801 (JP); SHINOHARA, Takenao, Naka-gun Ibaraki 319-1195 (JP); SAKANE, Yoshihiko, Tokyo 100-8405 (JP)
(74) Representative: Beyer, Andreas
(86) International application number: PCT/JP2008/066189
(87) International publication number: WO 2009/034952

(56) References cited:
- WO-A1-02/00739
- JP-A- 01 131 215
- JP-A- 05 009 224
- JP-A- 2000 001 511
- JP-A- 2001 500 906
- JP-A- 2005 220 161

## Description

### Technical Field

The present invention relate to a method of molding a fluororesin and optic devices, and more particularly, to a method of precisely molding an amorphous perfluoro resin with an accuracy of submicron or less and optic devices molded of the resin.

### Background Art

Conventionally, synthetic quartz and acrylic resins have been used as precision optic devices having ultraviolet transparency. Particularly, quartz and magnesium fluoride have been used as a material for a neutron beam focusing device.

However, quartz is expensive, lower in workability than resins, and is not suitable for precision processing. The acrylic resin enables injection molding of complicated shapes by thermoplastic molding, is used generally as an optic material, but contains hydrogen with a large neutron scattering cross-section, and is not suitable for a material for a neutron beam focusing device. Further, magnesium fluoride is also very hard to perform high-precision processing.

Meanwhile, as a material with excellent ultraviolet transparency, attention is directed toward an amorphous perfluoro resin that is one of fluororesins.

Fluororesins typified by polytetrafluoroethylene (PTFE) are excellent in heat resistance, chemical resistance, water repellency, weatherability resistance, electrical insulating properties, etc. and used in various fields such as semiconductors, batteries and excellent weather resistant coatings due to their properties. Among the resins, the amorphous perfluoro resin is provided with aforementioned properties specific to fluororesins, while being amorphous, and therefore, has a feature of being transparent in a wide wavelength range of ultraviolet, visible and near-infrared regions. Further, as compared with the acrylic resin, the amorphous perfluoro resin is excellent in optical transparency in a wide wavelength range of from the ultraviolet region to infrared region, corrosion resistance, water repellency, oil repellency, etc. EP1035422 A2 discloses a neutron beam controlling apparatus wherein each of the plate members comprises a material selected from the group consisting of PTFE (polytetrafluoroethylene), carbon, deuterated polyethylene, heavy water and dry ice. The method of making the plate members is not mentioned in EP1035422 A2

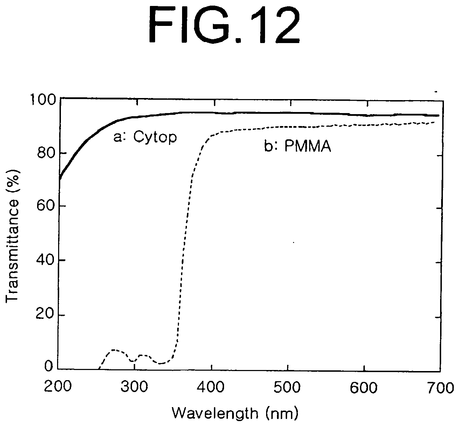

FIG. 12 shows the ultraviolet/visible light transmittance of an amorphous perfluoro resin (ASAHI GLASS Co., LTD. "CYTOP" (Trademark)). In this figure, the solid line a indicates the amorphous perfluoro resin, and the dashed lines b indicate an acrylic resin (PMMA: Polymethyl methacrylate).

From the figure, it can be understood that the ultraviolet transparency of the amorphous perfluoro resin is greatly excellent as compared with the acrylic resin.

### Disclosure of Invention

### Problems to be Solved by the Invention

However, generally, the fluororesin is hard to mold, and it is not possible to perform precision molding on the fluororesin. Particularly, an amorphous perfluoro resin is originally a fluororesin for thin-film coating for antireflection, water proof, water repellency, etc. and is supplied while being dissolved in a specific fluorine-containing solvent. Usually, the amorphous perfluoro resin solution is applied on a substrate, heated and dried, and the thin film is formed. However, when a mold is used as a substrate, since the formed thin film is not removed from the mold easily, it is not possible to fabricate a molded component as a single item.

When the amorphous perfluoro resin can be molded precisely, it is possible to manufacture high-performance optic devices with ultraviolet transparency, particularly, neutron beam focusing device with high efficiency.

In view of the above-mentioned conventional problem, it is an object of the invention to provide a method of precisely molding an amorphous perfluoro resin with an accuracy of submicron or less and optic devices molded of the resin.

### Means for Solving the Problem

Therefore, the present invention provides a method of molding an amorphous perfluoro resin characterized by having the steps of (a) dissolving an amorphous perfluoro resin in a solvent, (b) pouring a solution of the amorphous perfluoro resin in a first mold, (c) heating a vessel with the solution placed therein, thereby volatilizing the solvent, and forming the amorphous perf luoro resin in the shape of a plate, and (d) pouring the amorphous perfluoro resin formed in the shape of a plate in a second mold, and pressurizing from one surface side to the other surface side of the second mold while heating, where the amorphous perfluoro resin is molded into a desired shape.

Herein, the solvent in the step (a) is an aprotic fluorine-containing solvent, and the first mold in the step (b) is made of a material where a surface in contact with the solution is excellent in smoothness. Then, the first mold in the step (b) is glass where a surface in contact with the solution is mirror-finished.

Further, the second mold in the step (d) is a mold with a desired shape. The second mold in the step (d) is comprised of mirror-finished glass on one surface side and a mold with a desired shape on the other surface side. Then, a heating temperature of the solution in the step (c) ranges from 50°C to 300°C. Further, a heating temperature of the mold in the step (d) ranges from 50°C to 300°C, and an applied pressure is adjusted corresponding to the heating temperature.

Herein, the optic device is a micro lens, Fresnel lens, grating lens, micro prism or grating, and the invention provides a neutron optic device that refracts or reflects a neutron and thereby controls its traveling direction. Then, the invention further provides a neutron lens, neutron focusing apparatus, neutron speed discrimination apparatus, neutron bender or neutron chopper comprised of the neutron optic device.

### Advantageous Effect of the Invention

According to the invention, it is possible to manufacture precision optic devices made of an amorphous perfluoro resin that have not existed previously. Particularly, it is possible to fabricate precision optic devices (such as, for example, a micro lens, Fresnel lens, grating lens, micro prism, grating, etc.) with optical transparency from ultraviolet to infrared region and also excellence in corrosion resistance, water repellency, oil repellency and the like.

These precision optic devices are considered particularly being applied as an optical apparatus lens, prism, etc. in the ultraviolet region. Further, the amorphous perfluoro resin does not change polarization of the transmitted light, and therefore, can be used in a polarization optics system.

Moreover, by fabricating a thin-film Fresnel lens by the method of the invention, it is possible to manufacture a neutron beam focusing device with high efficiency not heretofore attained.

Further, by using the invention, it is possible to mass produce the precision optic devices as described above with ease, and it is thereby possible to provide the devices at low prices. Furthermore, the optic device of the invention is made of a fluororesin, and can be reduced in weight as compared with the conventional product. Still furthermore, according to the invention, since it is possible to perform fine molding, products can be made smaller in size.

### Brief Description of Drawings

FIG. 1 is a flowchart showing each step of a method of molding an amorphous perfluoro resin according to Embodiment 1 of the invention;
FIG. 2 is an explanatory view of a step of forming the amorphous perfluoro resin in the shape of a plate according to Embodiment 1 of the invention;
FIG. 3 is an explanatory view of a step of pressurizing and molding the amorphous perfluoro resin according to Embodiment 1 of the invention;
FIG. 4 is a flowchart showing each step of a method of molding an amorphous perfluoro resin according to Embodiment 2 of the invention;
FIG. 5 is an explanatory view of a step of pressurizing and molding the amorphous perfluoro resin according to Embodiment 2 of the invention;
FIG. 6 is a graph showing the near-infrared light transmittance of CYTOP (Trademark);
FIG. 7 is a graph showing refractive indices and Abbe numbers of CYTOP (Trademark) and typical organic polymers;
FIG. 8 is a table showing photoelasticity of CYTOP (Trademark) and other samples;
FIG. 9 is a table showing electric characteristics of CYTOP (Trademark), other fluororesins, and acrylic resin;
FIG. 10 contains graphs showing microwave dielectric properties of CYTOP (Trademark);
FIG. 11 is a graph showing a dielectric breakdown property of CYTOP (Trademark); and
FIG. 12 is a graph showing the ultraviolet/visible light transmittance of an amorphous perfluoro resin.

### Description of Symbols

1 Amorphous perfluoro solution
2 Vessel
3, 13 Plate-shaped amorphous perfluoro resin
4, 5, 15 Mold

### Best Mode for Carrying Out the Invention

In the invention, an amorphous perfluoro resin is an amorphous perfluoro resin dissolvable in a solvent, and preferable examples thereof are fluorine-containing polymers (hereinafter, referred to as fluorine-containing cyclic polymers) having a fluorine-containing aliphatic cyclic structure in a main chain dissolvable in a fluorine-containing solvent.

In this description, the fluorine-containing polymer having a fluorine-containing aliphatic cyclic structure in a main chain means that one or more carbon atoms constituting the fluorine-containing aliphatic ring are carbon atoms constituting the main chain of the fluorine-containing cyclic polymer. Among carbon atoms constituting the fluorine-containing aliphatic cyclic structure, carbon atoms constituting the main chain are derived from polymerizable double bonds of monomers constituting the fluorine-containing cyclic polymer.

For example, when the fluorine-containing cyclic polymer is a fluorine-containing polymer obtained by polymerizing cyclic monomers described later, two carbon atoms constituting the double bond are carbon atoms constituting the main chain.

Further, in the case of the fluorine-containing cyclic polymer obtained by cyclo-polymerizing monomers having two polymerizable double bonds , among four carbon atoms constituting two polymerizable double bonds, at least two carbon atoms are carbon atoms constituting the main chain.

The fluorine-containing aliphatic cyclic structure may be a cyclic structure that a ring is comprised of only carbon atoms, or may be a heterocyclic structure containing hetero atoms such as oxygen atoms and nitrogen atoms as well as carbon atoms. Preferable as the fluorine-containing aliphatic ring are fluorine-containing aliphatic rings having one or two ethereal oxygen atoms in the ring.

The number of atoms constituting the ring of the fluorine-containing aliphatic cyclic structure preferably ranges from 4 to 7. In other words, the fluorine-containing aliphatic cyclic structure is preferably a four-to-seven membered ring.

Preferable as the fluorine-containing cyclic polymer are fluorine-containing cyclic polymers (I') and fluorine-containing cyclic polymers (II') as described below. Fluorine-containing cyclic polymers (I'): Polymers having units based on a cyclic fluorine-containing monomer: Fluorine-containing cyclic polymer (II'): Polymers having units formed by cyclopolymerization of diene fluorine-containing monomers.

The "cyclic fluorine-containing monomer" is a monomer having a polymerizable double bond between carbon atoms constituting the fluorine-containing aliphatic ring or a monomer having a polymerizable double bond between a carbon atom constituting the fluorine-containing aliphatic ring and a carbon atom that is not contained in the fluorine-containing aliphatic ring.

Preferable as the cyclic fluorine-containing monomer is a compound (1) or compound (II).

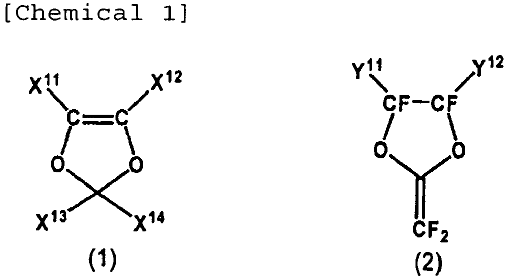

In the formula, X¹¹, X¹², X¹³, X¹⁴, Y¹¹ and Y¹² are a fluorine atom, perfluoroalkyl group, or perfluoroalkoxy group independently of one another.

As the perf luoroalkyl group in X¹¹, X¹², X¹³, X¹⁴ , Y¹¹ and Y¹², the carbon number preferably ranges from 1 to 7, and more preferably, from 1 to 4. The perfluoroalkyl group is preferably linear or branched, and more preferably, linear. More specifically, examples thereof are a trifluoromethyl group, pentafluoroethyl group and heptafluoropropyl group, and a trifluoromethyl group is particularly preferable.

As the perfluoroalkoxy group in X¹¹, X¹², X¹³, X¹⁴, Y¹¹ and Y¹², examples thereof are that an oxygen atom (-O-) is bound to the perfluoroalkoxy group.

A fluorine atom is preferable as X¹¹.

X¹² is preferably a fluorine atom, trifluoromethylgroup, or perfluoroalkoxy group with the carbon number ranging from 1 to 4, and more preferably, a fluorine atom or trifluoromethoxy group.

X¹³ and X¹⁴ are preferably a fluorine atom or perf luoroalkyl group with the carbon number ranging from 1 to 4, and more preferably, a fluorine atom or trifluoromethyl group, independently of each other.

Y¹¹ and Y¹² are preferably a fluorine atom, perfluoroalkyl group with the carbon number ranging from 1 to 4 , perfluoroalkoxy group with the carbon number ranging from 1 to 4, and more preferably, a fluorine atom or trifluoromethyl group, independently of each other.

In compound (1), X¹³ and X¹⁴ may be bound mutually to form the fluorine-containing aliphatic ring together with carbon atoms of bound X¹³ and X¹⁴.

The fluorine-containing aliphatic ring is preferably a four-to-six membered ring.

The fluorine-containing aliphatic ring is preferably a saturated aliphatic ring.

The fluorine-containing aliphatic ring may have an ethereal oxygen atom (-O-) in the ring. In this case, the number of ethereal oxygen atoms in the fluorine-containing aliphatic ring is preferably 1 or 2.

In compound (2), Y¹¹ and Y¹² may be bound mutually to form the fluorine-containing aliphatic ring together with carbon atoms of bound Y¹¹ and Y¹².

The fluorine-containing aliphatic ring is preferably a four-to-six membered ring.

The fluorine-containing aliphatic ring is preferably a saturated aliphatic ring.

The fluorine-containing aliphatic ring may have an ethereal oxygen atom (-O-) in the ring. In this case, the number of ethereal oxygen atoms in the fluorine-containing aliphatic ring is preferably 1 or 2.

Preferable specific examples of compound (1) include compounds (1-1) to (1-5).

Preferable specific examples of compound (2) include compounds (2-1) to (2-2).

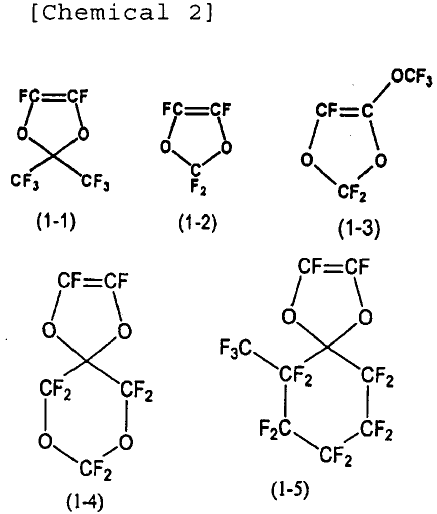

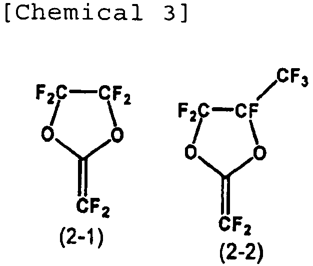

The fluorine-containing cyclic polymer (I') may be a homopolymer of the above-mentioned cyclic fluorine-containing monomer, or a copolymer of the cyclic fluorine-containing monomer and another monomer except such a monomer.

In addition, in the fluorine-containing cyclic polymer (I'), a rate of units based on the cyclic fluorine-containing monomer relative to the total of all the repetitive units constituting the fluorine-containing cyclic polymer (I') is preferably 20 mole% or more, more preferably 40 mole% or more, and can be 100 mole%.

The another monomer is not limited particularly, as long as the monomer can be copolymerized with the cyclic fluorine-containing monomer. More specifically, examples thereof are a diene fluorine-containing monomer, tetrafluoroethylene, chlorotrifluoroethylene, perfluoro (methyl vinyl ether), perfluoro (ethyl vinyl ether), and perfluoro (propyl vinyl ether).

The "diene fluorine-containing monomer" is a monomer having two polymerizable double bonds and fluorine atoms. The polymerizable double bond is not limited particularly, and is preferably a vinyl group, allyl group, acryloyl group and methacryloyl group.

As the diene fluorine-containing monomer, compound (3) is preferable.

CF₂=CF-Q-CF=CF₂ ... (3)

In the formula, Q may have an ethereal oxygen atom, and is a perfluoro alkylene group with the carbon number ranging from 1 to 3 such that a part of fluorine atoms can be replaced with halogen atoms except the fluorine atom. Examples of the halogen atom except the fluorine atom are a chlorine atom and bromine atom.

When Q is a perfluoro alkylene group having ethereal oxygen atoms, the ethereal oxygen atoms in the perfluoro alkylene group may exist at one terminal of the group, at both terminals of the group, or between carbon atoms of the group. From the viewpoint of cyclopolymerization, the oxygen atoms preferably exist at one terminal.

As a unit formed by cyclopolymerization of compound (3), examples thereof are repetition units of following formulas (3-1) to (3-4).

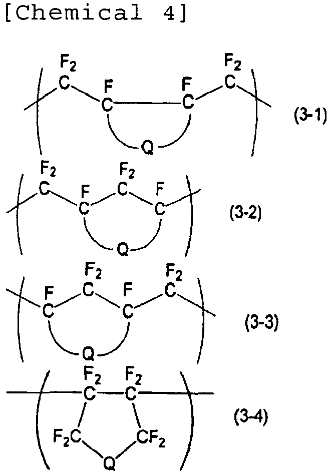

Specific examples of compound (3) include following compounds:
CF₂=CFOCF₂CF=CF₂
CF₂=CFOCF(CF₃)CF=CF₂
CF₂=CFOCF₂CF₂CF=CF₂
CF₂=CFOCF₂CF(CF₃)CF=CF₂
CF₂=CFOCF(CF₃)CF₂CF=CF₂
CF₂=CFOCFClCF₂CF=CF₂
CF₂=CFOCCl₂CF₂CF=CF₂
CF₂=CFOCF₂COCF=CF₂
CF₂=CFOC(CF₃)₂OCF=CF₂
CF₂=CFOCF₂CF(OCF₃)CF=CF₂
CF₂=CFCF₂CF=CF₂
CF₂=CFCF₂CF₂CF=CF₂
CF₂=CFCF₂OCF₂CF=CF₂

The fluorine-containing cyclic polymer (II') may be comprised of only units formed by cyclopolymerization of the above-mentioned diene fluorine-containing monomer, or may be a copolymer having the units and other units except the units.

In addition, in the fluorine-containing cyclic polymer (II'), a rate of units formed by cyclopolymerization of the diene fluorine-containing monomer relative to the total of all the repetitive units constituting the fluorine-containing cyclic polymer (II') is preferably 50 mole% or more, more preferably 80 mole% or more, and most preferably 100 mole%.

The other monomer is not limited particularly, as long as the monomer can be copolymerized with the diene fluorine-containing monomer. More specifically, examples thereof are cyclic fluorine-containing monomers such as compound (1) and compound (2) as described previously, tetrafluoroethylene, chlorotrifluoroethylene, perfluoro(methyl vinyl ether), perfluoro(ethyl vinyl ether), and perfluoro(propyl vinyl ether).

The average molecular weight of the fluorine-containing cyclic polymer ranges preferably from 3,000 to 1,000,000, and more preferably, from 10,000 to 300,000.

In addition, as a cyclopolymerization method, homopolymerization method, and copolymerization method of the above-mentioned monomers, for example, it is possible to apply conventional publicly known methods disclosed in Japanese Laid-Open Patent Publication No. H04-189880, etc.

Commercially available products of the fluorine-containing cyclic polymer include CYTOP (produced by ASAHI GLASS Co., Ltd.), etc.

In the invention, a solvent to dissolve the above-mentioned amorphous perfluoro resin is preferably a fluorine-containing solvent, and more preferably, an aprotic fluorine-containing solvent.

The molecular weight of the fluorine-containing solvent being excessively high results in not only increases in the viscosity of the fluorine-containing polymer solution, but also decreases in the solubility of the fluorine-containing polymer, and therefore, the molecular weight of the fluorine-containing solvent is preferably 1000 or less. Further, to increase the solubility of the fluorine-containing polymer, the fluorine content of the fluorine-containing solvent is preferably in the range of 60 percent to 80 percent by weight. Examples of the preferable fluorine-containing solvent include following solvents.

Examples of the aprotic fluorine-containing solvent are polyfluoro aromatic compound, polyfluoro trialkyl amine, polyfluoro alkane, polyfluoro cyclic ether and hydro fluoro ether (HFE). These aprotic fluorine-containing solvents may be used alone, or in combination of two or more kinds.

Examples of the polyfluoro aromatic compound include perfluorobenzene, pentafluorobenzene, 1,3-bis(trifluoromethyl)benzene and 1,4-bis(trifluoromethyl)benzene.

Examples of the polyfluoro trialkyl amine are perfluoro tributyl amine and perfluoro tripropyl amine.

Examples of the polyfluoro cyclic ether include perfluoro(2-butyl tetrahydrofuran).

Examples of the polyfluoro alkane are perfluoro hexane, perfluoro octane, perfluoro decane, perfluoro dodecane, perfluoro(2,7-dimethyloctane), 1,1,2-trichloro-1,2,2-trifluoroethane, 1,1,1-trichloro-2,2,2-trifluoroethane, 1,3-dichloro-1,1,2,2,3-pentafluoropropane, 1,1,1,3-tetrachloro-2,2,3,3-tetrafluoropropane, 1,1,3,4-tetrachloro-1,2,2,3,4,4-hexafluorobutane, perfluoro(1,2-dimethylhexane), perfluoro(1,3-dimethylhexane), perfluoro cyclohexane, perfluoro(1,3,5-trimethylcyclohexane), 2H,3H-perfluoropentane, 1H-perfluorohexane, 1H-perflurooctane, 1H-perfluorodecane, 1H, 1H, 1H, 2H, 2H-perfluorohexane, 1H, 1H, 1H, 2H, 2H-perfluorooctane, 1H, 1H, 1H, 2H, 2H-perfluorodecane 3H,4H-perfluoro-2-methylpentane, 2H, 3H-perfluoro-2-methylpentane, 1H-1,1-dichloro perfluoropropane and 1H-1,3-dichloro perfluoropropane.

The hydro fluoro ether (HFE) is preferably an HFE represented by general formula R¹-O-R² (R¹ is a linear or branched polyfluoro alkyl group with the carbon number ranging from 5 to 12 that may have an ether bond, and R² is a linear or branched alkyl group with the carbon number ranging from 1 to 5.)

When the carbon number of R¹ is 4 or less, it is hard to dissolve the fluorine-containing polymer, and since the R¹ with the carbon number being 13 or more is hard to commercially get, the carbon number of R¹ is selected from the range of 5 to 12. The carbon number of R¹ preferably ranges from 6 to 10, and more preferably, from 6 to 7 and from 9 to 10.

The polyfluoro alkyl group is a group where two or more hydrogen atoms of the alkyl group are replaced with fluorine atoms, and includes perfluoro alkyl groups where all the hydrogen atoms of the alkyl group are replaced with fluorine atoms, and groups where two or more hydrogen atoms of the alkyl group are replaced with fluorine atoms while one or more hydrogen atoms of the alkyl group are replaced with halogen atoms except the fluorine atom. The halogen atom except the fluorine atom is preferably a chlorine atom.

The polyfluoro alkyl group is preferably a group where 60% or more of the number of hydrogen atoms of a corresponding alkyl group are replaced with fluorine atoms, and more preferably, a group where 80% or more of such a number are replaced with fluorine atoms. The polyfluoro alkyl group is further preferably a perfluoro alkyl group.

In the case of R¹ having an ether bond, since the solubility is inhibited when the number of ether bonds is too high, the number of ether bonds in the R¹ preferably ranges from 1 to 3, and more preferably, 1 or 2. When the carbon number of R² is 6 or more, the solubility of the polymer containing the fluorine-containing cyclic structure is extremely inhibited. Preferable examples of R² are a methyl group or ethyl group.

Examples of the HFE are F(CH₂)₅OCH₃, F(CH₂)₆OCH₃, F(CH₂)₇OCH₃, F(CH₂)₈OCH₃, F(CH₂)₉OCH₃, F(CH₂)₁₀OCH₃, H(CH₂)₆OCH₃, (CF₃)₂CF(OCH₃)CFCF₂CF₃ , F(CF₂)₃OCF(CF₃)CF₂OCH₃, F(CF₂)₃OCF(CF₃)CF₂OCF(CF₃)CF₂OCH₃, F(CF₂)₈OCH₂CH₂CH₃, (CF₃)₂CFCF₂CF₂OCH₃, and F(CF₂)₂O(CF₂)₄OCH₂CH₃.

As the HFE, (CF₃)₂CF(OCH₃)CFCF₂CF₃ is particularly suitable.

Among the fluorine-containing solvents except the above-mentioned solvents are fluorine-containing polyethers of low molecular weights, etc.

Embodiments of the invention will specifically be described below with reference to drawings.

### (Embodiment 1)

As Embodiment 1, specific steps will be described below to precisely mold an amorphous perfluoro resin.

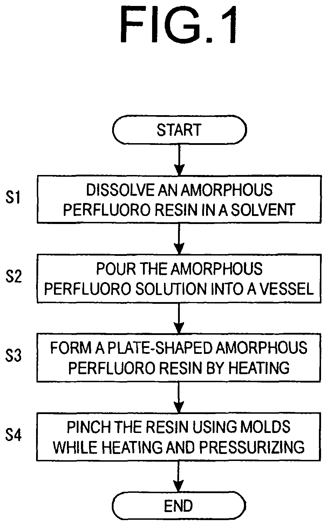

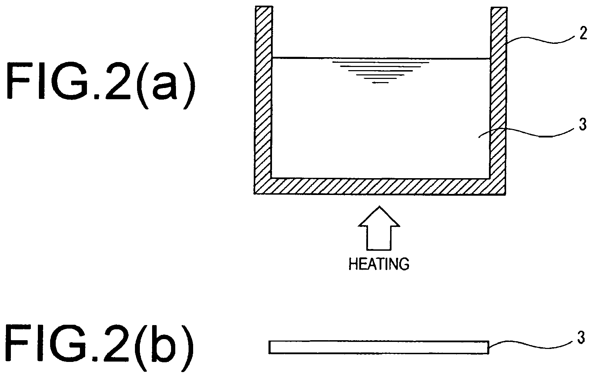

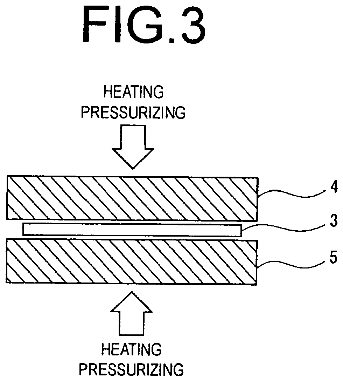

FIG. 1 is a flowchart showing each step of a method of molding an amorphous perfluoro resin according to Embodiment 1 of the invention, FIG. 2 is an explanatory view of a step of forming the amorphous perfluoro resin in the shape of a plate according to Embodiment 1 of the invention, and FIG. 3 is an explanatory view of a step of pressurizing and molding the amorphous perfluoro resin.

First, an amorphous perfluoro resin is dissolved in a perfluoro solvent (step S1).

Next, as shown in FIG. 2(a), prepared is a vessel 2 made of a material such as glass with good releasability against the amorphous perfluoro resin, and the amorphous perfluoro solution 1 prepared in step S1 is poured into the vessel 2 (step S2).

Then, when the perfluoro solvent is volatilized by heating the vessel 2 with the amorphous perfluoro solution 1 placed therein to 50° to 300°C, a plate-shaped amorphous perfluoro resin 3 is obtained as shown in FIG. 2(b) (step S3).

Next, as shown in FIG. 3, by pinching the plate-shaped amorphous perfluoro resin 3 from both sides using molds 4 and 5 and heating and pressurizing the resin 3 , an intended precision optic device or the like is molded (step S4). At this point, the heating temperature ranges from 50° to 300°C, and the applied pressure is adjusted according to the heating temperature.

Thus, by forming an amorphous perfluoro resin in the shape of a thin film or plate and then heating and molding the resin while pressurizing, poor releasability from a mold is overcome which is the conventional problem, and it is possible to easily manufacture precise molded components such as a micro lens, etc. Then, the optic device manufactured by the molding method of the invention is excellent in ultraviolet transparency, corrosion resistance, water repellency, oil repellency and the like, and can be made an inexpensive light-weight small-size optic device.

### [Embodiment 2]

As Embodiment 2, other specific steps will be described below to precisely mold an amorphous perfluoro resin.

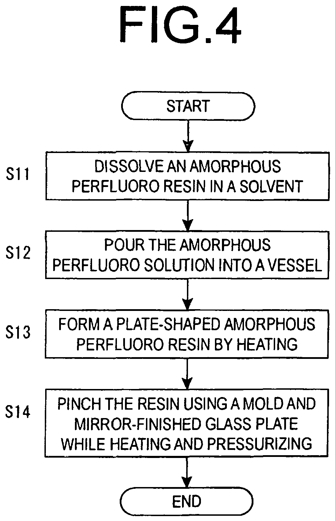

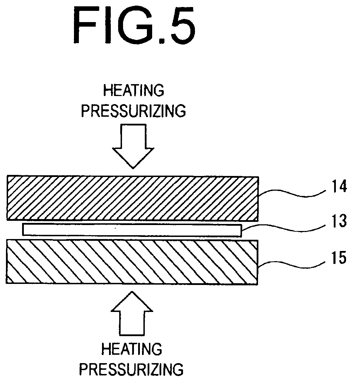

FIG. 4 is a flowchart showing each step of a method of molding an amorphous perfluoro resin according to Embodiment 2 of the invention, and FIG. 5 is an explanatory view of a step of pressurizing and molding the amorphous perfluoro resin.

First, an amorphous perfluoro resin is dissolved in a perfluoro solvent (step S11). Next, prepared is a vessel made of a material such as glass with good releasability against the amorphous perfluoro resin, and the amorphous perfluoro solution prepared in step S11 is poured into the vessel (step S12) (see FIG. 2).

Then, when the perfluoro solvent is volatilized by heating the vessel with the amorphous perfluoro solution placed therein to 50° to 300°C, a plate-shaped amorphous perfluoro resin is obtained (step S13) (see FIG. 2).

Next, as shown in FIG. 5, by pinching the plate-shaped amorphous perfluoro resin 13 using a mirror-finished glass plate 14 and mold 15 and heating and pressurizing the resin 13, an intended precision optic device or the like is molded (step S14) . At this point, the heating temperature ranges from 50° to 300°C, and the applied pressure is adjusted according to the heating temperature.

By the aforementioned method, it is possible to manufacture precision optic devices made of a fluororesin that have not existed previously. Particularly, it is possible to easily fabricate precision optic devices (such as, for example, a micro lens, Fresnel lens, grating lens, micro prism, grating, etc.) with optical transparency from ultraviolet to infrared region and further excellent in corrosion resistance, water repellency, oil repellency and the like.

These precision optic devices are considered particularly being applied as an optical apparatus lens, prism, etc. in the ultraviolet region. Further, the amorphous perfluoro resin used in the invention is amorphous, does not change polarization of the transmitted light, and therefore, can be used in a polarization optics system.

Moreover, by fabricating a thin-film Fresnel lens by the method of the invention, it is possible to manufacture a neutron beam focusing device with high efficiency not heretofore attained.

Optical characteristics and electric characteristics of the amorphous perfluoro resin used in the invention are as describedbelow. In addition, herein, CYTOP (Trademark) is used as an example of the amorphous perfluoro resin.

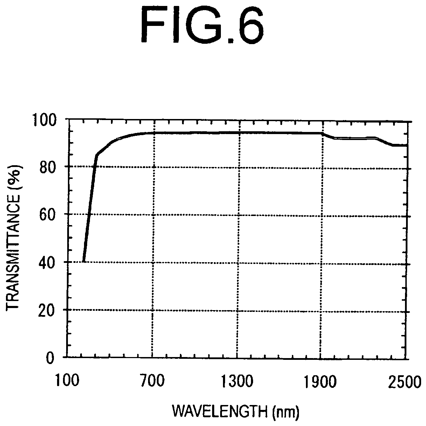

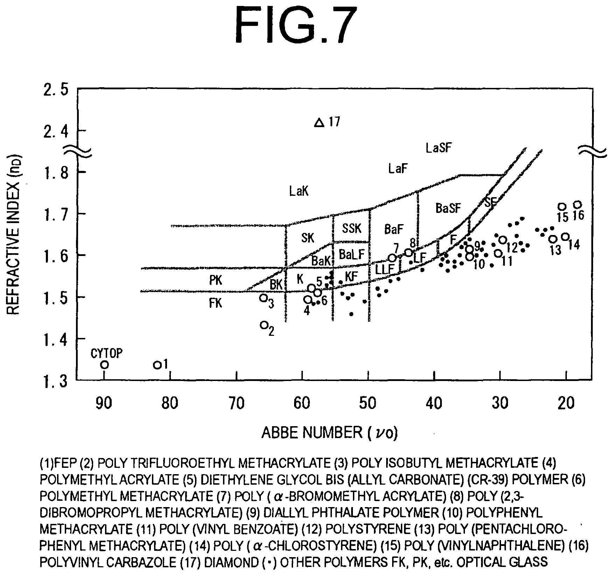

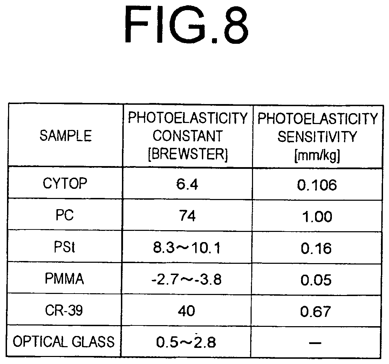

FIG. 6 is a graph showing the near-infrared light transmittance of CYTOP (Trademark), FIG. 7 is a graph showing refractive indices and Abbe numbers of CYTOP (Trademark) and typical organic polymers, and FIG. 8 is a table showing photoelasticity of CYTOP (Trademark) and other samples.

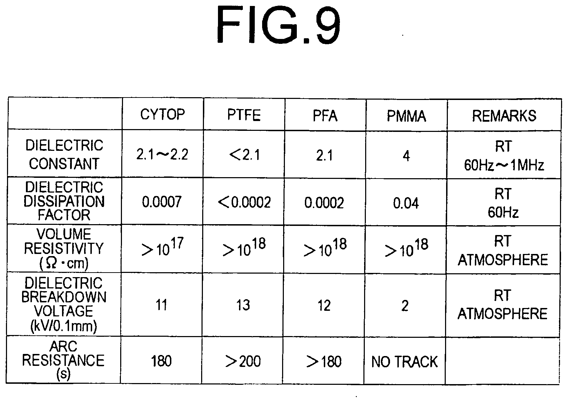

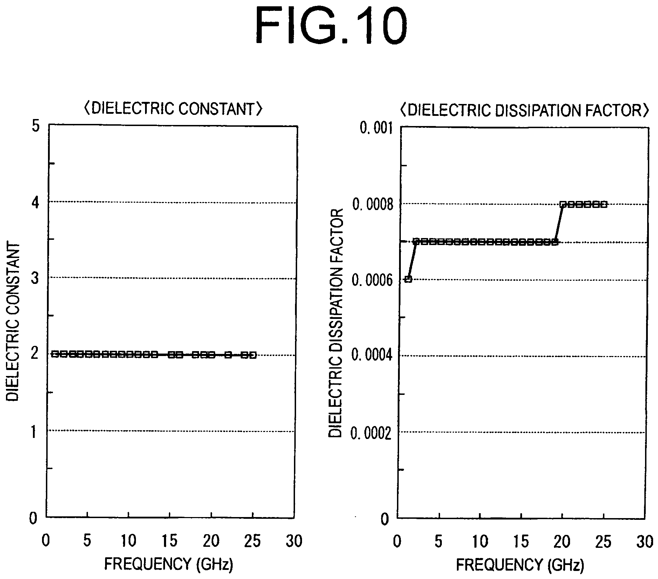

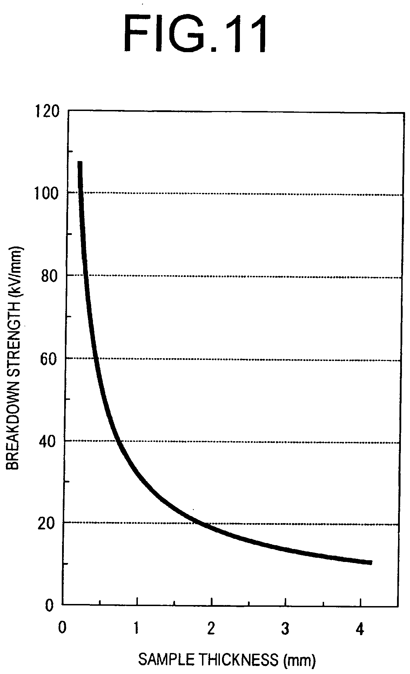

Further, FIG. 9 is a table showing electric characteristics of CYTOP (Trademark), other fluororesins, and acrylic resin, FIG. 10 contains graphs showing microwave dielectric properties of CYTOP (Trademark), and FIG. 11 is a graph showing a dielectric breakdown property of CYTOP (Trademark).

In the invention, it is possible to mold optic devices exploiting these characteristics. More specifically, the invention is applicable to optical apparatuses as described below.

### (1) Ultraviolet-ray disk

Each of optical disks (Blue-ray Disk, HDD and DVD) with high recording densities currently in practical use applies light (blue light) with a wavelength of 405 nm. By using a fine lens for ultraviolet-ray manufactured by the invention, since light (ultraviolet light) with a wavelength of about 200 nm can be used, it is possible to improve the recording density by about four times.

### (2) Ultraviolet-ray camera

According to the invention, it is possible to take pictures in a wide wavelength range of from the infrared region to ultraviolet region.

### (3) Ultraviolet-ray telescope

According to the invention, it is possible to observe celestial phenomena, etc. that cannot be observed in the visible region.

### (4) Ultraviolet-ray microscope

According to the invention, it is possible to observe minute objects, phenomena, etc. that cannot be observed in the visible region.

### (5) Broadband spectrometer

According to the invention, it is possible to conduct spectral observations in a wide wavelength range of from the ultraviolet region to infrared region.

### (6) Small-size ultraviolet-ray projector

By using the invention in a projection optics system of an ultraviolet light source, it is possible to actualize ultraviolet illumination, generation of ultraviolet-ray beams, and the like.

Further, by using the invention, it is possible to mass produce the precision optic devices as described above with ease, and it is thereby possible to provide the devices at low prices. Furthermore, the optic device of the invention is made of a fluororesin, and can be reduced in weight as compared with the conventional product. Still furthermore, according to the invention, since it is possible to perform fine molding, products can be made smaller in size.

### Industrial Applicability

The invention relates to a method of molding a fluororesin and optic devices, and more particularly, to a method of precisely molding an amorphous perfluoro resin with an accuracy of submicron or less and optic devices molded of the resin, and has industrial applicability.

## Claims

1. A method of molding an amorphous perfluoro resin, comprising the steps of:
(a) dissolving an amorphous perfluoro resin in a solvent;
(b) pouring a solution of the amorphous perfluoro resin in a first mold;
(c) heating a vessel with the solution placed therein, thereby volatilizing the solvent, and forming the amorphous perfluoro resin in the shape of a plate; and
(d) pouring the amorphous perfluoro resin formed in the shape of a plate in a second mold, and pressurizing from one surface side to the other surface side of the second mold while heating,
wherein the amorphous perfluoro resin is molded into a desired shape.

2. The method of molding an amorphous perfluoro resin according to claim 1, wherein the solvent in the step (a) is an aprotic fluorine-containing solvent.

3. The method of molding an amorphous perfluoro resin according to claim 1 or 2, wherein the first mold in the step (b) is made of a material where a surface in contact with the solution is smooth.

4. The method of molding an amorphous perfluoro resin according to any one of claims 1 to 3, wherein the first mold in the step (b) is glass where a surface in contact with the solution is mirror-finished.

5. The method of molding an amorphous perfluoro resin according to any one of claims 1 to 4, wherein the second mold in the step (d) is a mold with a desired shape.

6. The method of molding an amorphous perfluoro resin according to any one of claims 1 to 5, wherein the second mold in the step (d) is comprised of mirror-finished glass on one surface side and a mold with a desired shape on the other surface side.

7. The method of molding an amorphous perfluoro resin according to any one of claims 1 to 6, wherein a heating temperature of the solution in the step (c) ranges from 50°C to 300°C.

8. The method of molding an amorphous perfluoro resin according to claim 5 or 6, wherein a heating temperature of the mold in the step (d) ranges from 50°C to 300°C.

9. The method of molding an amorphous perfluoro resin according to any one of claims 1 to 8, wherein the amorphous perfluoro resin is molded into an optic device.

10. The method of molding an amorphous perfluoro resin according to claim 9, wherein the optic device is a micro lens, Fresnel lens, grating lens, micro prism or grating.

11. A neutron optic device,
wherein the neutron optic device is comprised of the optic device obtained according to claim 10, refracts or reflects a neutron, and thereby controls a traveling direction of the neutron.

12. A neutron lens, a neutron focusing apparatus, a neutron speed discrimination apparatus, a neutron bender or a neutron chopper that is comprised of the neutron optic device according to claim 11.

## Patentansprüche

1. Verfahren zur Formung eines amorphen Perfluor-Harzes, umfassend die Schritte:
(a) Auflösen eines amorphen Perfluor-Harzes in einem Lösungsmittel;
(b) Gießen einer Lösung des amorphen Perfluor-Harzes in eine erste Form;
(c) Erhitzen eines Gefäßes mit der darin platzierten Lösung, um dadurch das Lösungsmittel zu verflüchtigen, und Bilden des amorphen Perfluor-Harzes in der Form einer Platte; und
(d) Gießen des in der Form einer Platte gebildeten amorphen Perfluor-Harzes in eine zweite Form, und unter Druck setzen der zweiten Form von einer Oberflächenseite zu der anderen Oberflächenseite unter gleichzeitigem Erhitzen, wobei das amorphe Perfluor-Harz in eine gewünschte Form geformt wird.

2. Verfahren zum Formen eines amorphen Perfluor-Harzes nach Anspruch 1, wobei das Lösungsmittel im Schritt (a) ein aprotisches Fluor-haltiges Lösungsmittel ist.

3. Verfahren zum Formen eines amorphen Perfluor-Harzes nach Anspruch 1 oder 2, wobei die erste Form im Schritt (b) aus einem Material hergestellt ist, bei dem eine mit der Lösung in Kontakt stehende Oberfläche glatt ist.

4. Verfahren zur Formung eines amorphen Perfluor-Harzes nach einem der Ansprüche 1 bis 3, wobei die erste Form im Schritt (b) Glas ist, bei dem eine mit der Lösung in Kontakt stehende Oberfläche hochglanzpoliert ist.

5. Verfahren zur Formung eines amorphen Perfluor-Harzes nach einem der Ansprüche 1 bis 4, wobei die zweite Form im Schritt (d) eine Form mit einer gewünschten Gestalt ist.

6. Verfahren zur Formung eines amorphen Perfluor-Harzes nach einem der Ansprüche 1 bis 5, wobei die zweite Form im Schritt (d) aus hochglanzpoliertem Glas auf einer Oberflächenseite und einer Form mit einer gewünschten Gestalt auf der anderen Oberflächenseite besteht.

7. Verfahren zur Formung eines amorphen Perfluor-Harzes nach einem der Ansprüche 1 bis 6, wobei eine Heiztemperatur für die Lösung im Schritt (c) 50°C bis 300°C beträgt.

8. Verfahren zur Formung eines amorphen Perfluor-Harzes nach Anspruch 5 oder 6, wobei eine Heiztemperatur der Form im Schritt (d) 50°C bis 300°C beträgt.

9. Verfahren zur Formung eines amorphen Perfluor-Harzes nach einem der Ansprüche 1 bis 8, wobei das amorphe Perfluor-Harz in eine optische Vorrichtung geformt wird.

10. Verfahren zur Formung eines amorphen Perfluor-Harzes nach Anspruch 9, wobei die optische Vorrichtung eine Mikrolinse, eine Fresnel-Linse, eine Gitterlinse, ein Mikroprisma oder ein Gitter ist.

11. Optische Neutronenvorrichtung, wobei die optische Neutronenvorrichtung aus der gemäß Anspruch 10 erhaltenen optischen Vorrichtung besteht, ein Neutron bricht oder reflektiert, und dadurch eine Bewegungsrichtung des Neutrons steuert.

12. Neutronenlinse, Neutronen-fokussierendes Gerät, Neutronengeschwindigkeitsdifferenzierendes Gerät, Neutronen-Ablenker, oder Neutronen-Chopper, das die optische Neutronenvorrichtung gemäß Anspruch 11 umfasst.

## Revendications

1. Procédé de moulage d'une résine perfluoro amorphe, comprenant les étapes de :
(a) dissoudre une résine perfluoro amorphe dans un solvant ;
(b) verser une solution de la résine perfluoro amorphe dans un premier moule ;
(c) chauffer un récipient avec la solution qui y est placée, volatilisant ainsi le solvant, et façonnant la résine perfluoro amorphe sous la forme d'une plaque ; et
(d) verser la résine perfluoro amorphe façonnée sous la forme d'une plaque dans un deuxième moule, et mettre sous pression d'un côté de surface à l'autre côté de surface du deuxième moule tout en chauffant,
dans lequel la résine perfluoro amorphe est moulée en une forme souhaitée.

2. Procédé de moulage d'une résine perfluoro amorphe selon la revendication 1, dans lequel le solvant à l'étape (a) est un solvant aprotique contenant du fluor.

3. Procédé de moulage d'une résine perfluoro amorphe selon la revendication 1 ou 2, dans lequel le premier moule à l'étape (b) est constitué d'un matériau où une surface en contact avec la solution est lisse.

4. Procédé de moulage d'une résine perfluoro amorphe selon l'une quelconque des revendications 1 à 3, dans lequel le premier moule à l'étape (b) est en verre où une surface en contact avec la solution est un fini miroir.

5. Procédé de moulage d'une résine perfluoro amorphe selon l'une quelconque des revendications 1 à 4, dans lequel le deuxième moule à l'étape (d) est un moule ayant une forme souhaitée.

6. Procédé de moulage d'une résine perfluoro amorphe selon l'une quelconque des revendications 1 à 5, dans lequel le deuxième moule à l'étape (d) est composé de verre à fini miroir sur un côté de surface et d'un moule ayant une forme souhaitée sur l'autre côté de surface.

7. Procédé de moulage d'une résine perfluoro amorphe selon l'une quelconque des revendications 1 à 6, dans lequel une température de chauffage de la solution à l'étape (c) est comprise entre 50 °C et 300 °C.

8. Procédé de moulage d'une résine perfluoro amorphe selon la revendication 5 ou 6, dans lequel une température de chauffage du moule à l'étape (d) est comprise entre 50 °C et 300 °C.

9. Procédé de moulage d'une résine perfluoro amorphe selon l'une quelconque des revendications 1 à 8, dans lequel la résine perfluoro amorphe est moulée en un dispositif optique.

10. Procédé de moulage d'une résine perfluoro amorphe selon la revendication 9, dans lequel le dispositif optique est une micro lentille, une lentille Fresnel, une lentille à réseau, un micro prisme ou un réseau.

11. Dispositif optique neutronique,
dans lequel le dispositif optique neutronique est constitué du dispositif optique obtenu selon la revendication 10, réfracte ou réfléchit un neutron, et commande ainsi une direction de déplacement du neutron.

12. Lentille neutronique, appareil de focalisation neutronique, appareil de discrimination de la vitesse de neutrons, cintreuse à neutrons ou hachoir à neutrons qui est constitué du dispositif optique neutronique selon la revendication 11.
